# EUROPEAN PATENT SPECIFICATION

(11) **EP 0 722 993 B1**
(45) Date of publication and mention of the grant of the patent: **08.09.1999**
(21) Application number: 95100562.8
(22) Date of filing: 17.01.1995
(51) Int. Cl.: C09D 5/10, C09D 183/02, C09D 183/04, B05D 7/16

(54) **Process for coating a steel plate**
Verfahren zum Beschichten eines Stahlbleches
Procédé de revêtement d'une tôle d'acier

(43) Date of publication of application: 24.07.1996
(73) Proprietor: Dai Nippon Toryo Co., Ltd., Osaka (JP); MITSUBISHI JUKOGYO KABUSHIKI KAISHA, Tokyo 100 (JP)
(72) Inventor: Shinohara, Toshio, Soraku-gun, Kyoto (JP); Matsuda, Mitsuhiro, Ibaraki-shi, Osaka (JP); Nakayama, Shunsuke, Suita-shi, Osaka (JP); Nishimoto, Munehiro, Tondabayashi-shi, Osaka (JP); Shibata, Akio, Mitsubishi Jukogyo K. K., Nagasaki-shi, Nagasaki-ken (JP); Yamada, Junichi, Mitsubishi Jukogyo K. K., Nagasaki-shi, Nagasaki-ken (JP)
(74) Representative: Wächtershäuser, Günter, Prof. Dr.

(56) References cited:
- EP-A- 0 555 879
- EP-A- 0 579 253
- US-A- 4 163 810

## Description

The present invention relates to a process for coating a steel plate, whereby a coating film excellent in corrosion preventing properties, adhesion, etc. can be formed.

EP-A1 0 579 253 discloses a process of coating a corrosion protect film on a steel substrate. However, this reference does not disclose a process wherein a primary rust preventive material is used which comprises a silyl group-containing vinyl resin.

For a steel plate to be used for a steel structure such as a tank, a bridge or a ship, it has been common for the purpose of preventing rust to adopt (a) a method wherein a primary rust preventive coating material is coated thereon and then, after masking a portion which is not required to be coated, such as a portion to be welded or fused, an organic solvent type coating material is coated thereon, or (b) a method wherein a primary rust preventive coating material is coated on steel plates, then the coated steel plates are assembled by e.g. fusing and welding, and then an organic solvent-type coating material is coated thereon.

However, by such conventional methods, an organic solvent type coating material is used as a finish coating material, whereby it has been difficult to form a thick coating film by one operation, and it has been necessary to repeat wet-on-wet coating a few times. Thus, such methods have had problems such that the operation efficiency for coating is poor; and since an organic solvent is used, the working environment for coating is bad, there is a danger of fire, and there is a problem also from the viewpoint of conservation of resources.

Further, the above-mentioned method (a) requires a step of masking a portion which is not required to be coated, which makes the process cumbersome. On the other hand, in the above-mentioned method (b), the steel plates are assembled and then coating is applied, whereby it has had problems that uniform coating is difficult as compared with coating at the stage of steel plates, and the working efficiency for coating is very poor.

The present inventors have studied a possibility of coating on a coating film of a primary rust preventive coating material a powder coating material instead of the conventional organic solvent type coating material, as the finish coating material, so that a thick coating film can be obtained by one coating operation without using an organic solvent.

However, heretofore, when a primary rust preventive coating material is applied to a steel plate which will be subjected to heat processing such as fusing, welding or stress relieving, an inorganic type primary rust preventive coating material using an inorganic binder such as an alkali silicate or an alkyl silicate excellent in the heat resistance, has been used not only to provide corrosion preventive properties but also to minimize the heat deterioration or baking loss of the coating film, and such an inorganic primary rust preventive coating material has been found to be very poor in the adhesion to the powder coating material.

The reason for this poor adhesion is believed to be such that while the inorganic primary rust preventive coating material is poor in the flexibility of the coating film, the powder coating material will have substantial shrinkage and strain of the coating film during the curing of the coating film as compared with the organic solvent-type coating material, whereby the adhesion between the two coating films tends to be poor.

Under these circumstances, it is an object of the present invention to develop a primary rust preventive coating material excellent in the adhesion to the powder coating material without reducing the heat resistance and the corrosion preventing properties and to provide a process for coating a steel plate, which provides good working efficiency for coating utilizing the characteristic of the powder coating material such that when applied to a steel plate having a portion which is not required to be coated, removal of the coating film is easy.

Thus, the present invention provides a process for coating a steel plate, which comprises coating and curing on the surface of the steel plate, a primary rust preventive coating material comprising a zinc powder and a binder which comprises (A) a hydrolyzed condensate of a tetraalkoxy silicate and/or a hydrolyzed condensate of an organoalkoxysilane of the formula RSi(OR')₃ wherein R is a C₁₋₈ organic group, R' is a C₁₋₅ alkyl group or a C₁₋₄ acyl group, and (B) a silyl group-containing vinyl resin, wherein the weight ratio of the SiO₂ component in (A) to (B) is from 98:2 to 60:40, then coating a powder coating material thereon to form a coating film of the powder coating material, removing the coating film of the powder coating material formed on a portion which is not required to be coated, and then curing the remaining coating film of the powder coating material.

Now, the present invention will be described in detail.

The primary rust preventive coating material to be used in the present invention is the one composed of substantially the same components as the components for conventional inorganic primary rust preventive coating materials, except that a certain specific binder is employed.

Namely, the primary rust preventive coating material to be used in the present invention comprises a zinc powder and a binder which comprises (A) a hydrolyzed condensate of a tetraalkoxy silicate and/or a hydrolyzed condensate of an organoalkoxysilane of the formula RSi(OR')₃ wherein R is a C₁₋₈ organic group, R' is a C₁₋₅ alkyl group or a C₁₋₄ acyl group, and (B) a silyl group-containing vinyl resin, as the essential components, and various components, for example, a pigment such as an extender pigment, a rust preventive pigment or a coloring pigment, a solvent, an additive such as an anti-sagging agent, a wetting agent, a curing accelerator, a segregation preventive agent, a precipitation preventive agent or an antistatic agent, may be incorporated as the case requires.

The hydrolyzed condensate of a tetraalkoxy silicate is the one obtained by reacting a tetraalkoxy silicate such as tetramethoxy silicate, tetraethoxy silicate, tetrapropoxy silicate, tetraisopropoxy silicate or tetrabutoxy silicate in a solvent such as an alcohol by using a necessary amount of water and an acid catalyst such as hydrochloric acid, nitric acid or formic acid. Generally, the molecular weight of the hydrolyzed condensate is preferably from 2,000 to 30,000 as the weight average molecular weight calculated as polystyrene.

R in the organoalkoxysilane of the formula RSi(OR')₃ is a C₁₋₈ organic group, for example, an alkyl group such as a methyl group, an ethyl group or a n-propyl group, or a γ-chloropropyl group, a vinyl group, a γ-glycidoxypropyl group, a phenyl group, a 3,4-epoxycyclohexyl ethyl group, or a γ-aminopropyl group. R' is a C₁₋₅ alkyl group or a C₁₋₄ acyl group, such as a methyl group, an ethyl group, a n-propyl group or an acetyl group.

Specific examples of such an organoalkoxysilane include methyltrimethoxysilane, methyltriethoxysilane, ethyltrimethoxysilane, ethyltriethoxysilane, n-propyltrimethoxysilane, γ-chloropropyltrimethoxysilane, vinyl trimethoxysilane, 3,3,3-trichloropropyltrimethoxysilane, γ-glycidoxypropyltrimethoxysilane, γ-methacryloxypropyltriethoxysilane, phenyltrimethoxysilane, γ-aminopropyltrimethoxysilane, and 3,4-epoxycyclohexylethyltrimethoxysilane.

Such a hydrolyzed condensate of an organoalkoxysilane is obtainable by a condensation reaction of an organoalkoxysilane in a substantially the same manner as in the case of the above-mentioned tetraalkoxy silicate.

Such a hydrolyzed condensate preferably has a weight average molecular weight of from 1,000 to 100,000, more preferably from 3,000 to 30,000, as calculated as polystyrene.

As the above-mentioned silyl group-containing vinyl resin, a resin of the following formula having at least one silyl group in its molecule and a molecular weight of from 1,000 to 30,000, is preferred.

Xₙ-Si(R₁)₃₋ₙ-CH(R₂)-

wherein X is a hydrolyzable group such as halogen, alkoxy, acyloxy, ketoxymate, amino, acid amide, amidoxy, marcapto, alkenyloxy or phenoxy, and each of R₁ and R₂ is hydrogen or a monovalent hydrocarbon group such as a C₁₋₁₀ alkyl group, an aryl group or an aralkyl group, and n is an integer of from 1 to 3.

Such a resin can be produced by reacting a hydrosilane compound of the formula Xₙ-Si(R₁)₃₋ₙ-H wherein X, R₁ and n are as defined above, with a vinyl resin having a carbon-carbon double bond in the presence of a catalyst.

As such a hydrosilane compound, methyldichlorosilane, methyldiethoxysilane, methyldiacetoxysilane or methyldiaminoxysilane may, for example, be mentioned as a typical example. The amount of the hydrosilane compound is usually from 0.5 to 2 mol times to the carbon-carbon double bond contained in the vinyl resin. The above vinyl resin is suitably a resin composed mainly of a homopolymer or copolymer of a vinyl monomer selected from the group consisting of a (meth)acrylic acid ester such as methyl (meth)acrylate, ethyl (meth)acrylate or 2-ethylhexyl (meth)acrylate; a carboxylic acid or its acid anhydride such as (meth)acrylic acid, itaconic acid or maleic anhydride; an epoxy compound such as glycidyl (meth)acrylate; an amino compound such as diethylaminoethyl (meth)acrylate; an amide compound such as (meth)acrylamide; acrylonitrile, styrene and vinyl acetate. By radically copolymerizing e.g. allyl (meth)acrylate or diallyl phthalate during the production of such a homopolymer or copolymer of a vinyl monomer, it is possible to introduce a carbon-carbon double bond for a hydrosilylation reaction, into the vinyl resin.

As another method for its production, a method may be mentioned wherein the above vinyl monomer and a vinyl group-containing silyl compound such as vinyl trichlorosilane, vinyl triethoxysilane, vinyl trimethoxysilane, vinyl tris(β-methoxyethoxy)silane, γ-methacryloxypropyltrimethoxysilane or vinyl triacetoxysilane are polymerized by radical polymerization.

Such a silyl group-containing vinyl resin is specifically disclosed in Japanese Examined Patent Publication No. 19871/1991 and Japanese Unexamined Patent Publications No. 171754/1986, No. 225205/1986 and No. 132977/1988. As commercial products, Zemlac YC-3623 and Zemlac YC-3835 (tradenames, manufactured by Kanegafuchi Chemical Ind. Co., Ltd.) may be mentioned.

The binder as a constituting component of the primary rust preventive coating material comprises the above described hydrolyzed condensate of a tetraalkoxy silicate and/or the hydrolyzed condensate of an organoalkoxysilane of the above-mentioned formula (A) and the silyl group-containing vinyl resin (B), wherein the blend proportions of the two are such that the weight ratio of the SiO₂ component in (A) to (B) is from 98:2 to 60:40, preferably from 90:10 to 70:30. If component (A) is larger than the above range, the after-mentioned adhesion to the powder coating material tends to be poor, and the crack resistance, flexibility or the like tends to be poor. On the other hand, if it is less than the above range, the heat resistance, the corrosion preventing properties and the curing properties tend to be poor, such being undesirable.

The zinc powder to be used for the primary rust preventive coating material of the present invention, is preferably a powder product having an average particle size of from 1 to 15 µm or a flake product having an average longer diameter of from 3 to 30 µm. The zinc powder is incorporated to provide a corrosion preventive effect to the primary rust preventive coating material by an electrochemical action.

The pigment which may be incorporated as the case requires, may, for example, be an extender pigment such as talc, calcium carbonate, calcium sulfate, barium sulfate or mica, a rust preventive pigment such as zinc phosphate, aluminum phosphate, calcium phosphate, barium borate, calcium metaborate, zinc molybdate or calcium molybdate; or a coloring pigment such as titanium oxide, iron oxide red or carbon black. The above-mentioned solvent may, for example, be an alcohol or its derivative such as methanol, ethanol, i-propyl alcohol, ethylene glycol, ethylene glycol monomethyl ether or propylene glycol monoethyl ether; a ketone such as acetone or methyl ethyl ketone; an ester such as methyl acetate or ethyl acetate; or a hydrocarbon such as xylene or toluene; or water.

The primary rust preventive coating material composed of the above described constituting components, preferably has a composition comprising from 5 to 50 wt%, preferably from 7 to 20 wt%, of the binder, from 15 to 70 wt%, preferably from 20 to 50 wt%, of the zinc powder, from 0 to 60 wt%, preferably from 20 to 50 wt%, of a pigment, and from 1 to 10 wt% of additives, wherein the solid content is from 50 to 95 wt%, preferably from 60 to 90 wt%.

Next, as the powder coating material to be used in the present invention, any conventional powder coating material may be used without any particular restriction. This powder coating material is the one prepared by melt-kneading a mixture containing a conventional synthetic resin such as an epoxy resin, an acrylic resin, an unsaturated polyester resin or a fluorine resin, as an essential component, and having various components for example a curing agent, a pigment and an additive such a surface adjusting agent incorporated as the case requires, by an extruder, a heat roll mill, a kneader or the like at a temperature at which no substantial crosslinking reaction will take place between the above-mentioned synthetic resin and the curing agent, followed by cooling and pulverization. The powder coating material is preferably adjusted to have an average particle size of from 10 to 250 µm, preferably from 20 to 80 µm, and a melting point of from 60 to 130°C, preferably from 70 to 120°C.

However, in the present invention, it is particularly preferred to employ an active energy radiation curable powder coating material, whereby the coating film of the powder coating material can be cured at a low temperature in a short period of time on a steel plate having a large heat capacity.

The active energy radiation curable powder coating material to be used in the present invention is composed of substantially the same composition as a conventional powder coating material except that a resin having a polymerizable double bond, which undergoes radical polymerization to have a higher molecular weight and form a cured coating film when irradiated by an active energy radiation, is used.

Namely, the active energy radiation curable powder coating material to be used in the present invention is the one containing a resin having a polymerizable double bond, as an essential component, and having various components for example, a pigment such as a coloring pigment, a corrosion preventive pigment or an extender pigment, a photoconductive material, an additive such as a surface controlling agent, an anti-sagging agent or an anti-static agent may be incorporated as the case requires. When an ultraviolet ray is used as the active energy radiation, it is necessary to further incorporate a photopolymerization initiator.

Such a resin is a resin which is solid at room temperature and which has a melting point of from 60 to 130°C, preferably from 70 to 120°C, and has a polymerizable double bond.

If the melting point is lower than the above range, the powder coating material tends to undergo blocking, whereby the storage stability will be poor. On the other hand, if it exceeds the above range, a very large heat energy will be required for melting the powder coating material, when it is applied to a steel plate having a large heat capacity.

The resin has a polymerizable double bond, so that when an active energy radiation is irradiated to the molten coating film, the resin undergoes radical polymerization to have a higher molecular weight thereby to improve the physical and chemical strength. Accordingly, it is preferred to let the resin have from about 1.2 to 10 polymerizable double bonds, preferably from 1.5 to 5 polymerizable double bonds, per molecule on average. Further, it is advisable not to incorporate a resin curing agent to the active energy radiation curable powder coating material, since it is undesirable that after melting the coating film, curing starts before irradiation of the energy radiation. Thus, the active energy radiation curable powder coating material is designed so that the resin molecules will be directly bonded and cured by the polymerizable double bonds.

The resin to be used in the present invention is not particularly limited so long as it satisfies the above conditions. Various conventional resins such as an acrylic resin, an epoxy resin, an unsaturated polyester rein and a fluorine resin, may be employed. Usually, the molecular weight of the resin is preferably from about 1,000 to 100,000. Specifically, a molecular weight of from 1,500 to 50,000, particularly from 5,000 to 30,000, is preferred for the acrylic resin, a molecular weight of from 1,000 to 30,000, particularly from 1,200 to 10,000, is preferred for the epoxy resin, and a molecular weight of from 1,000 to 30,000, particularly from 3,000 to 20,000, is preferred for the unsaturated polyester resin.

Such a resin can be produced by reacting a polymer or oligomer (a) having a functional group such as a hydroxyl group, an isocyanate group, a carboxyl group, a glycidyl group or an amino group with a monomer, oligomer or polymer (b) having a functional group reactive with the above functional group by a conventional method. At that time, by using a monomer, oligomer or polymer having a polymerizable double bond for at least one of (a) and (b), a resin having a polymerizable double bond can be obtained.

The combination of functional groups of the above (a) and (b) may, for example, be a combination of a hydroxyl group with a carboxyl group, an isocyanate group or a glycidyl group; a combination of an isocyanate group with an amino group; a combination of a carboxyl group with an amino group or a glycidyl group; or a combination of a glycidyl group with an amino group, as a typical example.

The proportions of the above (a) and (b) for reaction are preferably such proportions that the equivalent ratio of the functional groups of the two will be 1/1. However, in a case where unreacted free functional groups do not adversely affect the properties of the cured coating film, they may be mixed and reacted in such proportions that either one of the functional groups will remain unreacted.

The resin may be incorporated in an amount of from 30 to 100 wt%, preferably from 40 to 80 wt%, in the powder coating material. If the content of the resin is less than 30 wt%, the resulting coating film tends to be poor in various physical and chemical strength.

As the above-mentioned pigment, various pigments commonly used for conventional powder coating materials, for example, a coloring pigment such as titanium oxide, zinc oxide, zinc sulfide, carbon black, iron oxide red, lithopone, phthalocyanine blue or ultramarine blue, an extender pigment such as calcium carbonate, calcium sulfate, barium sulfate or talc, and other metallic pigments and the above-mentioned rust preventive pigments, may be used without any particular restriction. Such a pigment can be incorporated in an amount of up to 70 wt% in the powder coating material, but it is usually preferably at most 50 wt%.

As the above-mentioned photoconductive material, transparent spherical glass beads, transparent irregular-shaped glass powder or transparent hollow glass powder having an average particle size of from 5 to 60 µm may, for example, be mentioned as a typical example. The photoconductive material is incorporated to transmit an ultraviolet ray deep into the coating film, when the ultraviolet ray is used as the active energy radiation. Accordingly, it is not necessary to incorporate it in a case where a powder coating material containing no opaque component such as a coloring pigment, is used, or in a case where a thin coating is applied. In a case where a powder coating material having an opaque component incorporated, is used or in a case where the coating film thickness is at least 200 µm, it is advisable that a photoconducting material is incorporated in an amount of from 10 to 60 wt% in the powder coating material.

The above-mentioned photopolymerization initiator is necessary when the active energy radiation is a ultraviolet ray. In the case of an electron beam, the photopolymerization initiator may be used as the case requires. As the photopolymerization initiator to be used in the present invention, various photopolymerization initiators commonly used for conventional ultraviolet curable coating materials, for example, a benzoin compound such as benzoin or benzoin methyl ether; an anthraquinone compound such as anthraquinone or methyl anthraquinone; benzil; a phenyl ketone compound such as acetophenone or benzophenone; a sulfide compound such as diphenyl disulfide or tetramethyl thiuram sulfide; and an aromatic onium salt compound, may be used without any particular restriction. However, in a case where a powder coating material having an opaque component incorporated, is used or in a case where a thick coating is applied, it is particularly preferred to employ an acyl phosphine oxide compound such as trimethylbenzoyldiphenylphosphine oxide, dimethoxybenzoyldiphenylphosphine oxide, dichlorobenzoyldiphenylphosphine oxide or dimethylpropionyldiphenylphosphine oxide. In order to properly cure the coating film, the photopolymerization initiator is incorporated usually in an amount of from 0.1 to 5 parts by weight per 100 parts by weight of the resin.

The surface-controlling agent includes, for example, a cellulose derivative, a polymer of an acrylic acid long chain alkyl ester, a fluorinated polymer and wax, and the anti-sagging agent includes, for example, silica powder, bentonite and metal soap. The antistatic agent includes, for example, a guanidine derivative, a sulfonic acid derivative, a quaternary ammonium salt, a polyethylene glycol type nonionic surfactant, a phosphorus-containing anionic surfactant, a tin oxide-surface treated titanium oxide, mica and carbon.

The active energy radiation curable powder coating material to be used in the present invention, can be prepared by a conventional method. For example, it can be produced by melt-kneading a mixture of the above-mentioned various components by an extruder, a heat roll mill or a kneader at a temperature higher by about 5 to 50°C than the melting point of the resin used, followed by cooling and fine pulverization to obtain a powder having an average particle size of from 10 to 250 µm, preferably from 20 to 150 µm. However, the preparation is not limited to such a specific method, and other conventional methods may, of course, be employed.

Now, the process for coating a steel plate according to the present invention will be described.

Pretreatment such as blast treatment or degreasing treatment is applied to the steel plate surface, as the case requires, and then the above-mentioned primary rust preventive coating material is coated on the steel plate surface by a means such as air spraying or airless spraying so that the dried film thickness will be from 5 to 50 µm, preferably from 10 to 30 µm, followed by natural drying or forcible drying.

To the steel plate having a coating film of the primary rust preventive coating material thus applied, the powder coating material is coated by a means such as electrostatic spraying or air spraying so that the cured film thickness will be from 30 to 500 µm, preferably from 100 to 300 µm.

Then, the coating film at a portion where the coating film of the powder coating material is unwanted (i.e. a portion which is not required to be coated) such as a portion to be welded or fused, is removed.

The removing method is not particularly limited, but it is convenient to employ a method wherein a pipe means having a flat opening narrower than the width of the portion which is not required to be coated, is vacuumed from the rear end, and the forward end of the pipe means is brought in contact with the steel plate or is moved around the entire portion which is not required to be coated, with a distance of a few mm therefrom, so that the coating film of the powder coating material formed thereon is removed under suction. As another removing method, it is possible to employ a method wherein only the coating film formed at other than the portion which is not required to be coated, is electrostatically firmly bonded, and then compressed air is blown to the steel plate surface to scatter and remove the coating film of the powder coating material formed at the portion where the bonding strength is weak i.e. the portion which is not required to be coated. The removed powder coating material may be recovered and reused.

The coating film of the powder coating material has a merit in that it will not be wet like an organic solvent coating material, whereby the operation for removing the coating film is simple and requires less time for the removal treatment.

As mentioned above, after removing the coating film of the powder coating material on the portion which is not required to be coated, the coating film of the powder coating material remaining on the steel plate surface, is cured.

In a case where the powder coating material used, is thermoplastic, it is common that the coating film is melted by heating at a temperature higher by about 10 to 50°C than the melting point of the resin as a constituting component and then left to cool to form a cured coating film.

In a case where the powder coating material used, is thermosetting, the coating film is baked at a temperature at which the resin melts and undergoes a crosslinking reaction with the curing agent, usually at a temperature of from 150 to 250°C, for from 5 to 30 minutes, to form a cured coating film.

As the means for heating the powder coating material, high-frequency heating or infrared heating may be mentioned as a typical means.

On the other hand, in a case where the powder coating material used, is an active energy radiation curable type, the coating film is heated at a temperature higher by about 10 to 50°C than the melting point of the resin as a constituting component, to melt the coating film and then an ultraviolet ray or an electron beam is irradiated to the coating film while it is in a molten state, to form a cured coating film.

As the active energy radiation, an ultraviolet ray cr an electron beam is employed.

As the source for irradiating the ultraviolet ray, a mercury lamp, a xenon lamp, a metal halide lamp cr a carbon arc may, for example, be mentioned as a typical example. The dose for irradiation is usually from about 200 to 2,000 mj/cm². As the source for generating the electron beam, a Cockcroft type, a van de Graaf type, a resonance transformer type, a dynamitron type or a high frequency type, may, for example, be mentioned as a typical example. The dose is usually from 0.5 to 20 Mrad.

By the process of the present invention, the following effects, which can not be obtained by conventional techniques, can be obtained.
(1) In the present invention, a certain specific primary rust preventive coating material is used, whereby the coating film has heat resistance and corrosion resistance comparable to a conventional inorganic primary rust preventive coating material, the adhesion with the powder coating material is excellent, and the flexibility can also be improved.
(2) A powder coating material is used as a finish coating material, whereby a thick coating film can be formed by one operation, and since no organic solvent is used, the working environment for coating is good, the possibility of a danger of fire is less, and conservation of the resources is possible.
(3) In a case where after coating over the entire surface of a steel plate, a coating film formed at a portion which is not required to be coated, is to be removed, since a powder coating material is employed, the coating film will not be wet like an organic solvent type coating material and remains to be dried, whereby the removing operation is easy, and it is possible to eliminate a cumbersome step like a step for masking treatment, and the operation efficiency for coating is excellent.
(4) In a case where an active energy radiation curable type coating material is used as the powder coating material, it is unnecessary to conduct baking at a high temperature for a long period of time as in the case of a thermosetting type powder coating material, and accordingly, curing can be completed in a short period of time without requiring a large heat energy for curing the coating film on a steel plate having a large heat capacity.

Now, the present invention will be described in further detail with reference to Examples. However, it should be understood that the present invention is by no means restricted by such specific Examples. In the Examples, "parts" and "%" mean "parts by weight" and "% by weight", respectively.

### Preparation of a solution of a hydrolyzed condensate of a tetraalkoxy silicate

35 parts of tetraethoxy silicate ("Ethyl Silicate 40", tradename, manufactured by Nippon Colcoat K.K.) and 61 parts of isopropyl alcohol were stirred and mixed at 40°C, and then a mixture comprising 1 part of 1N hydrochloric acid and 3 parts of water, was dropwise added thereto over a period of 90 minutes. After the dropwise addition, the mixture was stirred at 40°C for further 4 hours to obtain a solution of a hydrolyzed condensate of tetraethoxy silicate (hereinafter referred to as hydrolyzed condensate A-1). The weight average molecular weight of the condensate as calculated as polystyrene was 13,000.

### Preparation of a solution of a hydrolyzed condensate of an organoalkoxysilane

40 parts of methyltriethoxy silicate and 54 parts of isopropyl alcohol were stirred and mixed at 40°C, and then a mixture comprising 0.3 part of 0.1N hydrochloric acid and 5.7 parts of water, was dropwise added thereto over a period of 90 minutes. After the dropwise addition, the mixture was stirred at 40°C for further 4 hours to obtain a solution of a hydrolyzed condensate of methyltriethoxy silicate (hereinafter referred to as hydrolyzed condensate A-2). The weight average molecular weight of the condensate as calculated as polystyrene was 10,000.

### Preparation of primary rust preventive coating materials

Components as identified in Table 1 were mixed to obtain primary rust preventive coating materials (i) to (ix).

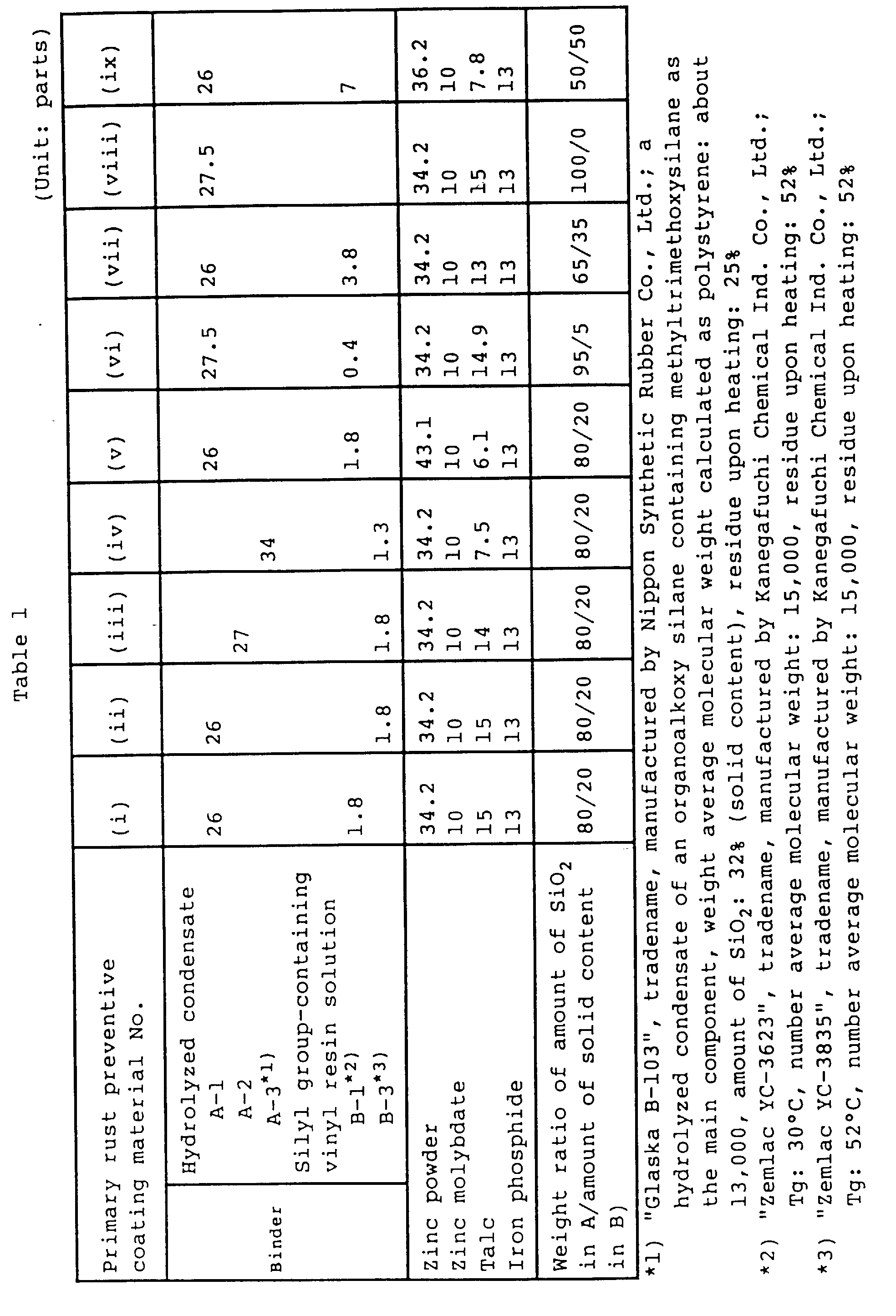

### Preparation of acrylic resin A

Into a four-necked flask, 200 parts of xylene and 260 parts of methyl isobutyl ketone were charged and heated to 110°C in a nitrogen atmosphere. Then, a solution preliminarily prepared by dissolving 13.7 parts of tert-butylperoxy 2-ethylhexanoate in a mixture comprising 180 parts of methyl methacrylate, 217.5 parts of ethyl acrylate, 53.2 parts of 2-hydroxyethyl methacrylate and 4.6 parts of acrylic acid, was dropwise added thereto with stirring over a period of 2.5 hours. Thirty minutes later, a mixture having 2.0 parts of tert-butylperoxy 2-ethylhexanoate dissolved in 30 parts of methyl isobutyl ketone, was dropwise added thereto over a period of 30 minutes, and the mixture was further aged for two hours.

Then, the mixture was cooled to 90°C, and 2.5 parts of dibutyltin dilaurate and 49.8 parts of 3-isopropenyl-α,α-dimethylbenzine isocyanate were added thereto, followed by a reaction for one hour. Then, the solvent was removed under reduced pressure. The obtained copolymer had a weight average molecular weight of 10,500, a hydroxyl value of 25.2 mgKOH/g (solid content), a melting point of 95°C, and about 4.7 polymerizable double bonds per weight average molecular weight (this copolymer will be hereinafter referred to as acrylic resin A).

### Preparation of epoxy resin B

Into a four-necked flask, 900 parts of a bisphenol A type epoxy resin ("Epicoat 1004", tradename, manufactured by Yuka Shell Epoxy K.K., melting point: 98°C, epoxy equivalent: 875-975), 86 parts of methacrylic acid, 0.2 part of hydroquinone and 1.5 parts of imidazole were charged and heated to 150°C in a nitrogen atmosphere, and the mixture was reacted until the acid value became 5. The obtained epoxy acrylate resin had a number average molecular weight of 1,550, a melting point of 118°C and about 1.8 polymerizable double bonds per number average molecular weight (this epoxy acrylate resin will be hereinafter referred to as epoxy resin B).

### Preparation of powder coating materials (I) to (III)

A blend product as identified in Table 2 was mixed by a Henschel mixer, then melted and kneaded by a buscokneader heated to 125°C and then cooled and roughly pulverized to obtain a pelletized kneaded product. This kneaded product was pulverized by a pin mill to obtain a powder coating material (I), (II) or (III) having an average particle size of about 40 µm.

**Table 2**

| | | (Unit: parts) | |
|---|---|---|---|
| Active energy radiation curable type powder coating material No. | (I) | (II) | (III) |
| Acrylic resin A | 60 | | |
| Epoxy resin B | | 60 | 60 |
| Transparent glass powder^{*4} | 25 | 25 | 25 |
| Titanium oxide | 10 | 10 | |
| Carbon black | | | 0.04 |
| Trimethylphosphine oxide | 1.2 | 1.2 | |
| Dicholorobenzoyldiphenylphosphine | | | 1.2 |
| oxide | | | |
| Flowability-adjustinq agent^{*5} | 0.2 | 0.2 | 0.2 |

| | | | |
|---|---|---|---|
| *4) Average particle size: 15 µm | | | |
| *5) "PF-S", tradename, manufactured by Kyoeisha Yushi K.K. | | | |

### EXAMPLES 1 TO 7 AND COMPARATIVE EXAMPLES 1 AND 2

A primary rust preventive coating material as identified in Table 1 was air spray-coated on the surface of a steel plate treated by shot blasting (size: 100 × 200 mm, thickness: 3.2 mm) so that the dried film thickness would be about 20 µm, and naturally dried for seven days at 20°C under a relative humidity of 65%.

Then, a powder coating material of a thermosetting epoxy resin type ("V pet #1300 gray", tradename, manufactured by Dai Nippon Toryo Co., Ltd.) was electrostatically spray-coated over the entire surface so that the cured film thickness would be about 150 µm. Then, the coating film of the powder coating material at the portion which was not required to be coated along the periphery with a width of 20 mm of the coated steel plate, was removed under suction by a suction apparatus having a flat opening with a width of 15 mm at the forward end. Then, baking was carried out at 230°C for 5 minutes to cure the coating film of the powder coating material.

Tests were carried out with respect to the initial coating film appearance, the initial adhesion and the coating film appearance after a salt spray test of the obtained coating film, and the results are shown in Table 3.

Further, a test on corrosion preventing properties (inclusive of heat resistance) was carried out with respect to the coating film of the primary rust preventive coating material prior to coating the powder coating material, and the results are also shown in Table 3.

As is apparent from Table 3, the coating films obtained by the process of the present invention were excellent in the corrosion preventing properties and the heat resistance, and they are also excellent in the adhesion to the powder coating material.

On the other hand, in Comparative Example 1 using a primary rust preventive coating material in which no silyl group-containing vinyl resin was incorporated, the adhesion to the powder coating material was poor.

Further, in Comparative Example 2 using a primary rust preventive coating material having an excess amount of the silyl group-containing vinyl resin incorporated, the corrosion preventing properties and the heat resistance were poor.

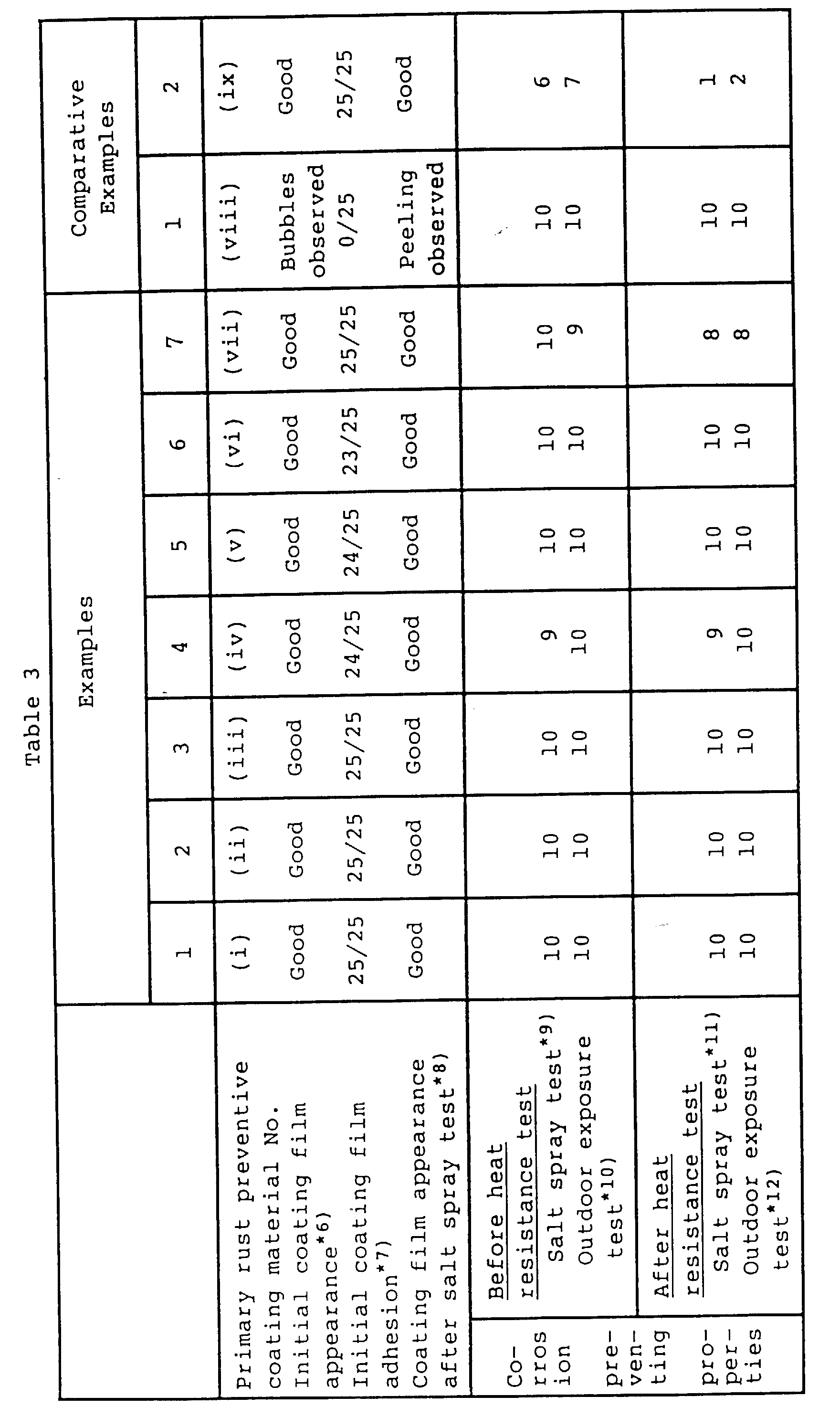

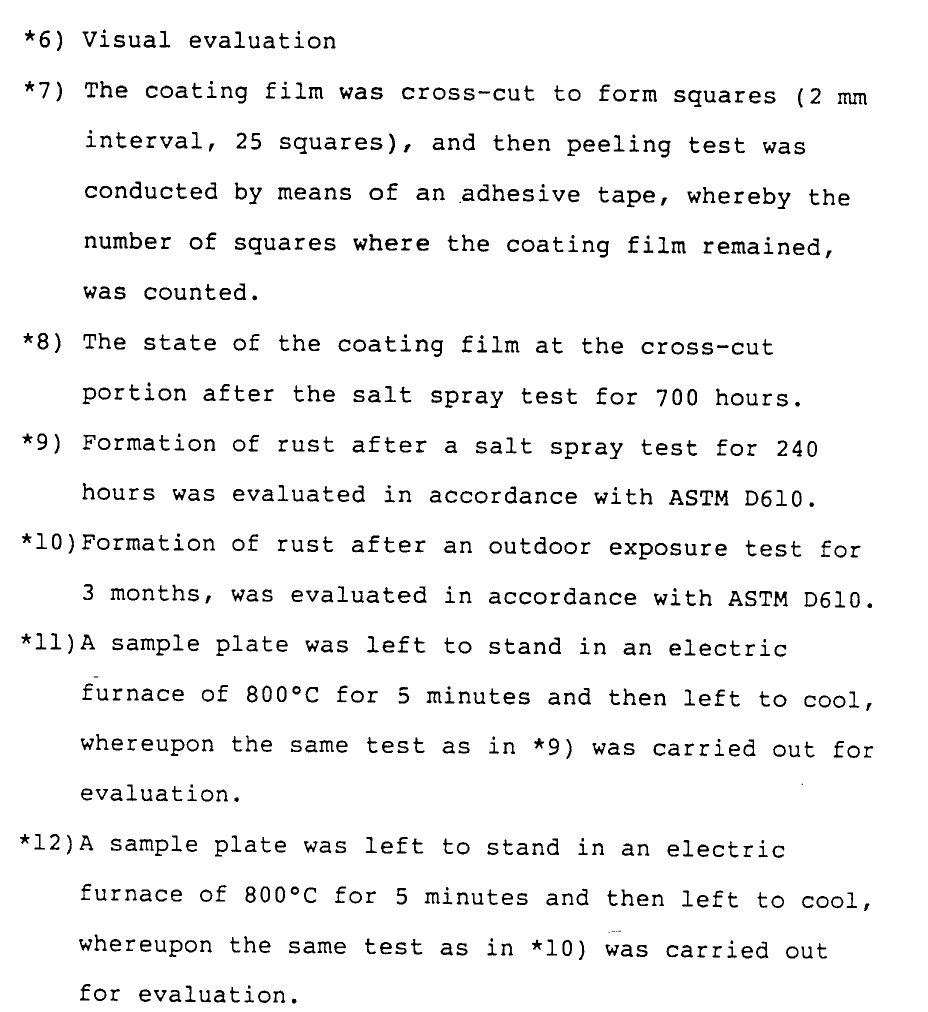

### EXAMPLES 8 TO 14 AND COMPARATIVE EXAMPLE 3

A cured coating film was formed in the same manner as in Example 1 except that a powder coating material of a thermosetting acrylic resin type ("V pet #1370", tradename, manufactured by Dai Nippon Toryo Co. Ltd.), was used instead of the powder coating material of the thermosetting epoxy resin type. As the primary rust preventive coating material, the one identified in Table 4 was used.

Tests were carried out with respect to the initial coating film appearance and the initial adhesion of the obtained coating film, and the results are shown in Table 4.

As is evident from Table 4, the coating films obtained in Examples 8 to 14 were excellent in the adhesion without any abnormality such as formation of bubbles. On the other hand, in Comparative Example 3 using a primary rust preventive coating material in which no silyl group-containing vinyl resin was incorporated, formation of bubbles was observed in the coating film, and the adhesion was poor.

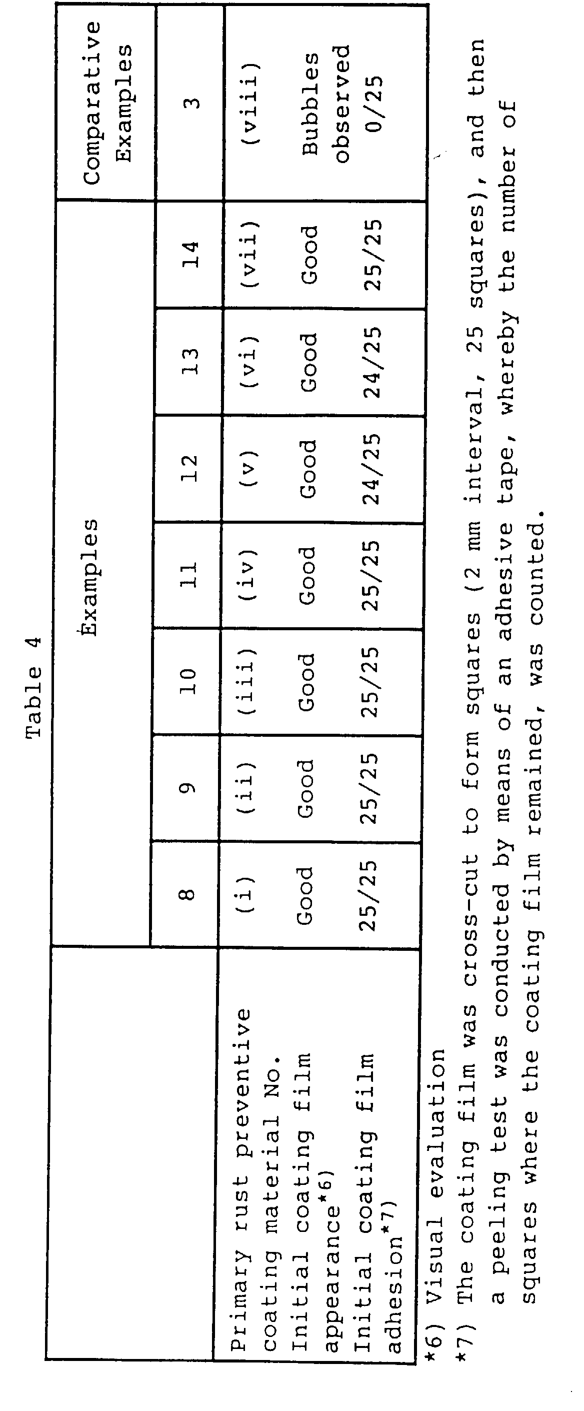

### EXAMPLES 15 AND 16 AND COMPARATIVE EXAMPLE 4

In the same manner as in Example 1, a primary rust preventive coating material as identified in Table 5 was coated and dried on a steel plate treated by shot blasting, and then an active energy radiation curable powder coating material as identified in Table 5 was electrostatically spray-coated over the entire surface so that the cured film thickness would be about 150 µm.

Then, in the same manner as in Example 1, the coating film of the powder coating material at the portion which was not required to be coated, was removed under suction. Then, the coated steel plate was put in an electric furnace, and the coating film of the powder coating material was melted under the conditions as identified in Table 5. Then, the steel plate was immediately put in an ultraviolet irradiation apparatus, and a ultraviolet ray was irradiated under the conditions as identified in Table 5 to cure the coating film of the powder coating material. The ultraviolet irradiation apparatus was provided with a metal halide lamp having a parallel type reflection plate, and the ultraviolet ray was irradiated with a distance between the lamp and the steel plate being set at 100 mm.

With respect to the obtained coating film, the same coating film property tests as in Example 1 were conducted, and the results are shown in Table 5.

As is evident from Table 5, the coating films obtained in Examples 15 and 16 were curable in a short period of time at a low temperature and were excellent in both the adhesion and the corrosion preventing properties.

On the other hand, in Comparative Example 4 using a primary rust preventive coating material in which no silyl group-containing vinyl resin was incorporated, the adhesion was poor.

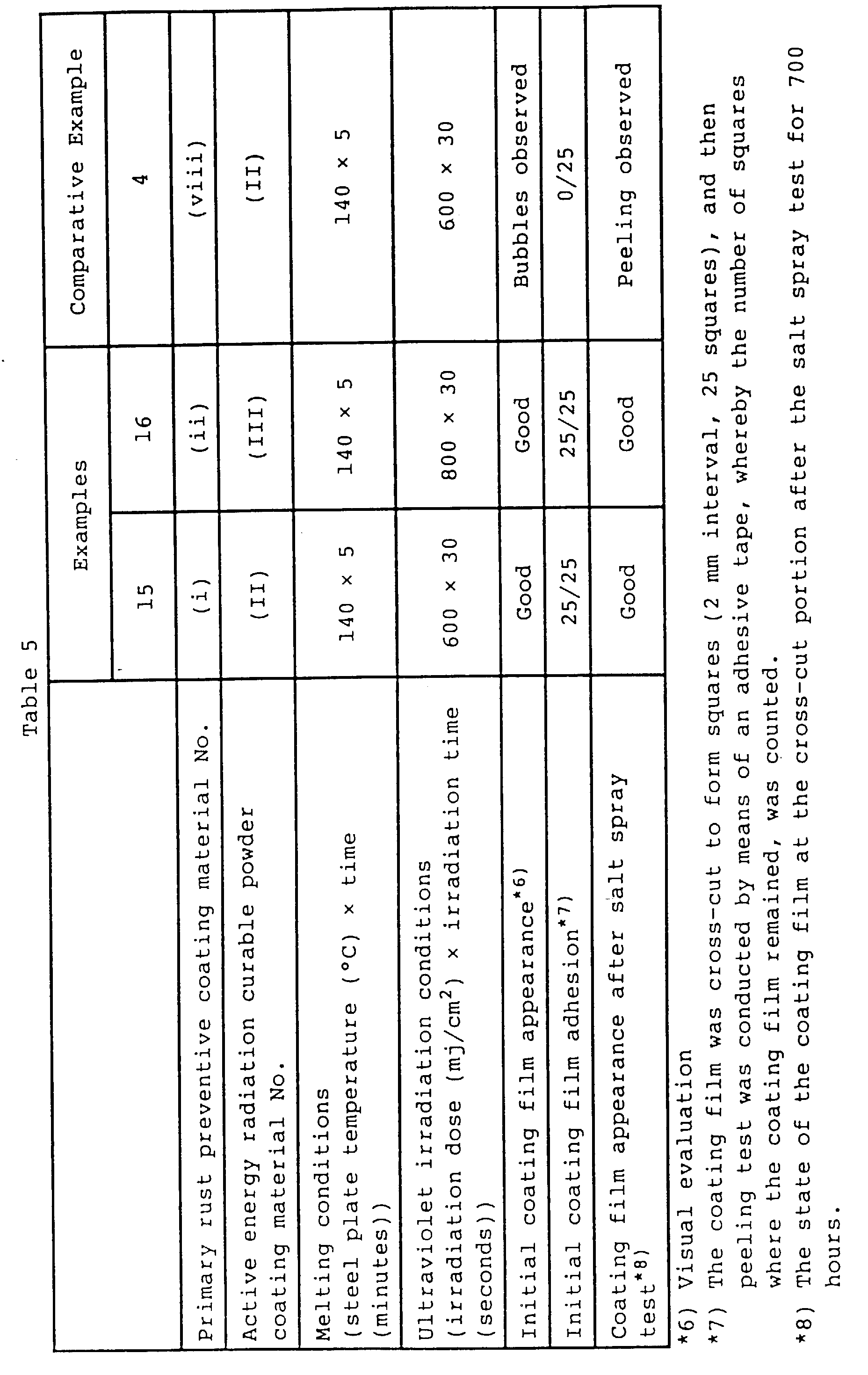

### EXAMPLE 17

In the same manner as in Example 1, primary rust preventive coating material No. (III) was coated and dried on a steel plate treated by shot blasting, and then active energy radiation curable type powder coating material No. (I) was electrostatically spray-coated over the entire surface, so that the cured film thickness would be 150 µm. Then, in the same manner as in Example 1, the coating film of the powder coating material at the portion which was not required to be coated, was removed under suction. Then, the coated steel plate was put into an electric furnace, and the coating film of the powder coating material was melted (condition: steel plate temperature × time = 130°C × 3 minutes). Then, the steel plate was immediately put into the above described ultraviolet radiation apparatus, and an ultraviolet ray was irradiated (condition: dose × time = 800 mj/cm2 × 30 seconds).

The obtained coating film was excellent with a initial adhesion of 25/25 without any abnormality such as formation of bubbles.

## Claims

1. A process for coating a steel plate, which comprises coating and curing on the surface of the steel plate, a primary rust preventive coating material comprising a zinc powder and a binder which comprises (A) a hydrolyzed condensate of a tetraalkoxy silicate and/or a hydrolyzed condensate of an organoalkoxysilane of the formula RSi(OR')₃ wherein R is a C₁₋₈ organic group, R' is a C₁₋₅ alkyl group or a C₁₋₄ acyl group, and (B) a silyl group-containing vinyl resin, wherein the weight ratio of the SiO₂ component in (A) to (B) is from 98:2 to 60:40, then coating a powder coating material thereon to form a coating film of the powder coating material, removing the coating film of the powder coating material formed on a portion which is not required to be coated, and then curing the remaining coating film of the powder coating material.

2. A process for coating a steel plate, which comprises coating and curing on the surface of the steel plate, a primary rust preventive coating material comprising a zinc powder and a binder which comprises (A) a hydrolyzed condensate of a tetraalkoxy silicate and/or a hydrolyzed condensate of an organoalkoxysilane of the formula RSi(OR')₃ wherein R is a C₁₋₈ organic group, R' is a C₁₋₅ alkyl group or a C₁₋₄ acyl group, and (B) a silyl group-containing vinyl resin, wherein the weight ratio of the SiO₂ component in (A) to (B) is from 98:2 to 60:40, then coating an active energy radiation curable powder coating material containing a resin having a polymerizable double bond and a melting point of from 60 to 130°C, thereon to form a coating film of the powder coating material, removing the coating film of the powder coating material formed on a portion which is not required to be coated, then melting the remaining coating film of the powder coating material by heating, and irradiating an ultraviolet ray or an electron beam thereto to cure the coating film of the powder coating material.

3. The process for coating a steel plate according to Claim 1 or 2, wherein the primary rust preventive coating material comprises from 5 to 50 wt% of the binder, from 15 to 70 wt% of the zinc powder and from 0 to 60 wt% of a pigment, wherein the solid content is from 50 to 95 wt%.

4. The process for coating a steel plate according to Claim 2, wherein the resin having a polymerizable double bond is at least one resin selected from the group consisting of an epoxy resin, an acrylic resin, an unsaturated polyester resin and a fluorine resin.

5. The process for coating a steel plate according to Claim 1 or 2, wherein the dried film thicknesses of the primary rust preventive coating material and the powder coating material are from 5 to 50 µm and from 30 to 500 µm, respectively.

## Patentansprüche

1. Verfahren zum Überziehen eines Stahlbleches, umfassend das Aufbringen eines primären rostverhindernden Überzugsmaterials auf die Oberfläche des Stahlbleches und Härten des Materials, das ein Zinkpulver und einen Binder umfaßt, wobei der Binder (A) ein hydrolysiertes Kondensat eines Tetraalkoxysilicats und/oder ein hydrolysiertes Kondensat eines Organoalkoxysilans der Formel RSi(OR')₃ umfaßt, worin R eine organische C₁₋₈-Gruppe ist, R' eine C₁₋₅-Alkylgruppe oder eine C₁₋₄-Acylgruppe ist, und (B) ein Silylgruppen enthaltendes Vinylharz ist, worin das Gewichtsverhältnis der SiO₂-Komponente in (A) zu (B) im Bereich von 98:2 bis 60:40 liegt, dann Aufbringen eines Pulverüberzugsmaterials darauf, zur Bildung eines Überzugsfilms aus dem Pulverüberzugsmaterial, Entfernen des Überzugsfilms aus dem Pulverüberzugsmaterial von einem Abschnitt, der nicht überzogen werden soll, und Härten des übrigen Überzugsfilms aus dem Pulverüberzugsmaterial.

2. Verfahren zum Überziehen eines Stahlbleches, umfassend das Aufbringen eines primären rostverhindernden Überzugsmaterials auf die Oberfläche des Stahlbleches und Härten des Materials, das ein Zinkpulver und einen Binder umfaßt, wobei der Binder (A) ein hydrolysiertes Kondensat eines Tetraalkoxysilicats und/oder ein hydrolysiertes Kondensat eines Organoalkoxysilans der Formel RSi(OR')₃ umfaßt, worin R eine organische C₁₋₈-Gruppe, R' eine C₁₋₅-Alkylgruppe oder eine C₁₋₄-Acylgruppe ist, und (B) ein Silylgruppen enthaltendes Vinylharz ist, worin das Gewichtsverhältnis der SiO₂-Komponente in (A) zu (B) im Bereich von 98:2 bis 60:40 liegt, dann Aufbringen eines durch aktive Energiestrahlung härtbaren Pulverüberzugsmaterials, enthaltend ein Harz mit einer polymerisierbaren Doppelbindung und einem Schmelzpunkt von 60 bis 130°C darauf zur Bildung eines Überzugsfilms aus dem Pulverüberzugsmaterial, Entfernen des Überzugsfilms aus dem Pulverüberzugsmaterial, der auf einem nicht zu überziehende Abschnitt gebildet ist, dann Schmelzen des übrigen Überzugsfilms aus dem Pulverüberzugsmaterial durch Erhitzen und Bestrahlen mit UV-Strahlen oder einem Elektronenstrahl zur Härtung des Überzugsfilms aus dem Pulverüberzugsmaterial.

3. Verfahren zum Überziehen eines Stahlbleches nach Anspruch 1 oder 2, worin das primäre rostverhindernde Überzugsmaterial von 5 bis 50 Gew.-% des Binders, von 15 bis 70 Gew.-% des Zinkpulvers und von 0 bis 60 Gew.-% eines Pigmentes umfaßt, wobei der Feststoffgehalt von 50 bis 95 Gew.-% beträgt.

4. Verfahren zum Überziehen eines Stahlbleches nach Anspruch 2, worin das Harz mit einer polymerisierbaren Doppelbindung mindestens ein Harz ist, ausgewählt aus der Gruppe bestehend aus einem Epoxyharz, einem Acrylharz, einem ungesättigten Polyesterharz und einem Fluorharz.

5. Verfahren zum Überziehen eines Stahlbleches nach Anspruch 1 oder 2, worin die Dicken des getrockneten Filmes aus dem primären rostverhindernden Überzugsmaterial und dem Pulverüberzugsmaterial im Bereich von 5 bis 50 µm bzw. von 30 bis 500 µm liegen.

## Revendications

1. Procédé de revêtement d'une tôle d'acier, qui comprend les étapes consistant à déposer un revêtement et à durcir sur la surface de la tôle d'acier, un matériau de revêtement antirouille primaire comprenant une poudre de zinc et un liant qui comprend (A) un condensat hydrolysé d'un tétraalcoxysilicate et/ou un condensat hydrolysé d'un organoalcoxysilane de formule RSi(OR')₃ dans laquelle R est un groupe organique en C₁ à C₈, R' est un groupe alkyle en C₁ à C₅ ou un groupe acyle en C₁ à C₄ et (B) une résine vinylique contenant un groupe silyle, dans lequel le rapport en poids du composant SiO₂ dans (A) sur (B) est de 98:2 à 60:40, puis à appliquer un matériau de revêtement pulvérulent sur celui-ci pour former un film de revêtement en ce matériau de revêtement pulvérulent, à retirer le film de revêtement en ce matériau de revêtement pulvérulent d'une partie qui n'a pas besoin d'être revêtue, puis à durcir le film de revêtement restant en ce matériau de revêtement pulvérulent.

2. Procédé de revêtement d'une tôle d'acier, qui comprend les étapes consistant à déposer un revêtement et à durcir sur la surface de la tôle d'acier, un matériau de revêtement antirouille primaire comprenant une poudre de zinc et un liant qui comprend (A) un condensat hydrolysé d'un tétraalcoxysilicate et/ou un condensat hydrolysé d'un organoalcoxysilane de formule RSi(OR')₃ dans laquelle R est un groupe organique en C₁ à C₈, R' est un groupe alkyle en C₁ à C₅ ou un groupe acyle en C₁ à C₄ et (B) une résine vinylique contenant un groupe silyle, dans lequel le rapport en poids du composant SiO₂ dans (A) sur (B) est de 98:2 à 60:40, puis à appliquer sur celui-ci un matériau de revêtement pulvérulent durcissable sous l'effet d'un rayonnement d'énergie active contenant une résine ayant une double liaison polymérisable et un point de fusion de 60 à 130 °C pour former un film de revêtement en matériau de revêtement pulvérulent, à retirer le film de revêtement en matériau de revêtement pulvérulent d'une partie qui n'a pas besoin d'être revêtue, puis à porter à fusion le film de revêtement restant en ce matériau de revêtement pulvérulent par chauffage, et à irradier celui-ci par un rayonnement ultraviolet ou un faisceau d'électrons pour durcir le film de revêtement en ce matériau de revêtement pulvérulent.

3. Procédé de revêtement d'une tôle d'acier selon la revendication 1 ou 2, dans lequel le matériau de revêtement antirouille primaire comprend de 5 à 50 % en poids du liant, de 15 à 70 % en poids de la poudre de zinc et de 0 à 60 % en poids d'un pigment, la teneur en matière sèche étant de 50 à 95 % en poids.

4. Procédé de revêtement d'une tôle d'acier selon la revendication 2, dans lequel la résine ayant une double liaison polymérisable est au moins une résine choisie dans le groupe constitué d'une résine époxy, d'une résine acrylique, d'une résine de polyester insaturée et d'une résine fluorée.

5. Procédé de revêtement d'une tôle d'acier selon la revendication 1 ou 2, dans lequel les épaisseurs de film séché du matériau de revêtement antirouille primaire et du matériau de revêtement pulvérulent sont respectivement de 5 à 50 µm et de 30 à 500 µm.
